# EUROPEAN PATENT APPLICATION

(11) **EP 4 813 847 A1**
(43) Date of publication of application: **30.09.2026**
(21) Application number: 24892982.0
(22) Date of filing: 06.09.2024
(51) Int. Cl.: B64U 80/80, E04H 6/44

(54) **UNMANNED AERIAL VEHICLE COMPARTMENT AND VEHICLE**

(30) Priority: 21.11.2023 CN 202311563082
(71) Applicant: BYD Company Limited, Shenzhen, Guangdong 518118 (CN)
(72) Inventor: SU, Jun, Shenzhen, Guangdong 518118 (CN); LI, Dongping, Shenzhen, Guangdong 518118 (CN); CHEN, Jicheng, Shenzhen, Guangdong 518118 (CN); LI, Yi, Shenzhen, Guangdong 518118 (CN); LEI, Liang, Shenzhen, Guangdong 518118 (CN); FANG, Jingcheng, Shenzhen, Guangdong 518118 (CN); LAI, Hongkun, Shenzhen, Guangdong 518118 (CN)
(74) Representative: Mathys & Squire
(86) International application number: PCT/CN2024/117338
(87) International publication number: WO 2025/107823

(57) **Abstract**

Provided is a vehicle, where the vehicle includes a drone hangar, and the drone hangar includes a hangar, a landing platform, and a battery swapping mechanism. The hangar includes a hangar body and a hangar door, where an opening is formed on the hangar body, the hangar door is movably disposed on the hangar body to open and close the opening, and a hangar compartment is jointly defined by the hangar body and the hangar door. The landing platform and the battery swapping mechanism are disposed side by side in the hangar compartment, the landing platform is opposite to the opening, while the battery swapping mechanism is staggered from the opening.

## Description

### CROSS-REFERENCES TO RELATED APPLICATIONS

This application claims priority to Chinese Patent Application No. 202311563082.6 filed with the China National Intellectual Property Administration on November 21, 2023 and entitled "DRONE HANGAR AND VEHICLE", which is incorporated herein by reference in its entirety.

### TECHNICAL FIELD

This application relates to the technical field of drones, and in particular, to a drone hangar and a vehicle.

### BACKGROUND

As photography enthusiasts, self-media practitioners, and other users have increasingly higher requirements on drone devices in various scenarios and different environments, and the combination of automobiles and drones at present has gradually formed a trend, vehicle-mounted drones have become increasingly diversified in functions and forms and are more and more widely applied to automobiles. A drone hangar is usually fixed to a vehicle body to implement takeoff, landing recovery, and placement functions of the drone. However, the drone hangar in the related technologies is not conducive to takeoff and landing of the drone, and automatic battery swapping is difficult after the drone returns to the hangar, resulting in poor functionality of the drone hangar.

### SUMMARY

This application is intended to solve at least one of technical problems existing in conventional technologies. For this reason, one objective of this application is to provide a drone hangar, which is conducive to takeoff and landing of a drone and also facilitates battery swapping for the drone, enriching functionality of the drone hangar.

Another objective of this application is to provide a vehicle using the foregoing drone hangar.

The drone hangar according to an embodiment of a first aspect of this application includes a hangar, wherein the hangar includes a hangar body and a hangar door, an opening is formed on the hangar body, the hangar door is movably disposed on the hangar body to open and close the opening, and a hangar compartment is jointly defined by the hangar body and the hangar door; a landing platform; and a battery swapping mechanism, wherein the landing platform and the battery swapping mechanism are disposed side by side in the hangar compartment, the landing platform is opposite to the opening, while the battery swapping mechanism is staggered from the opening.

According to the drone hangar provided by the embodiment of this application, the landing platform and the opening are oppositely disposed in the hangar compartment, so that the drone may directly take off and land through the opening, which is conducive to the use of the drone, and also improves service performance of the drone hangar. In addition, a combined action of the landing platform and the battery swapping mechanism is conducive to a battery swapping operation of the drone, so that the drone hangar has richer functions and is more convenient to use, and service performance of the drone hangar is further improved.

According to some embodiments of this application, the opening is formed at the top of the hangar body, and the landing platform can move up and down relative to the hangar.

According to some embodiments of this application, the drone hangar further includes: a motion mechanism, wherein the motion mechanism is disposed in the hangar compartment, and the motion mechanism is configured to cooperate with the landing platform to drive the landing platform to move close to or away from the opening.

According to some embodiments of this application, the motion mechanism includes: a motion mechanism body, wherein the motion mechanism body is disposed in the hangar compartment; and a plurality of lifting assemblies, wherein the plurality of lifting assemblies are disposed on the motion mechanism body, the plurality of lifting assemblies are spaced apart along a circumferential direction of the motion mechanism body, the landing platform is separately connected to the plurality of lifting assemblies, and the plurality of lifting assemblies are configured to drive the landing platform to move close to or away from the opening.

According to some embodiments of this application, the drone hangar further includes an electrical system, wherein the electrical system is communicatively connected to the battery swapping mechanism and the landing platform separately, a plurality of fitting members are disposed on the landing platform, and the plurality of fitting members are spaced apart along a circumferential direction of the landing platform. Each of the lifting assemblies includes: a screw rod, wherein the screw rod is connected to the motion mechanism body, the screw rod extends along an axial direction of the opening, and the fitting member is in threaded engagement with the screw rod; and a first driving member, wherein the first driving member is connected to the screw rod, and the electrical system is communicatively connected to the driving member.

According to some embodiments of this application, the drone hangar further includes: a centering mechanism, wherein the centering mechanism is disposed on the landing platform, and the centering mechanism is movable relative to the landing platform to move toward or away from a center of the landing platform.

According to some embodiments of this application, the centering mechanism includes: two first clamping rods, wherein the first clamping rods extend along a length direction of the hangar, the two first clamping rods are spaced apart along a width direction of the hangar, and the two first clamping rods can move close to or away from each other along the width direction of the hangar; and two second clamping rods, wherein the two second clamping rods extend along the width direction of the hangar, the two second clamping rods are spaced apart along the length direction of the hangar, and the two second clamping rods can move close to or away from each other along the length direction of the hangar.

According to some embodiments of this application, a first opening is formed on the landing platform, a gimbal fixing mechanism is disposed on one side of the landing platform that is away from the opening, the gimbal fixing mechanism is opposite to the first opening, and when the centering mechanism moves toward the center of the landing platform, a part of the gimbal fixing mechanism passes through the first opening.

According to some embodiments of this application, an opening and closing member is disposed at the first opening, the opening and closing member is connected to one of the two second clamping rods, and the second clamping rod is configured to drive the opening and closing member to move along the length direction of the hangar to open or close the first opening, when the centering mechanism moves toward the center of the landing platform, the opening and closing member opens the first opening, and when the centering mechanism moves away from the landing platform, the opening and closing member closes the first opening.

According to some embodiments of this application, a charging compartment is disposed in the hangar compartment; the battery swapping mechanism includes: a battery swapping mechanism body, wherein the battery swapping mechanism body is disposed in the hangar compartment, and a second driving member is disposed on the battery swapping mechanism body; a rotating assembly, wherein the rotating assembly is connected to the battery swapping mechanism body, the rotating assembly is adjacent to the charging compartment, the rotating assembly is connected to the second driving member, and when the second driving member operates, the second driving member drives the rotating assembly to move between the charging compartment and the landing platform; and a clamping assembly, wherein one end of the clamping assembly is rotatably connected to the rotating assembly, and the other end of the clamping assembly is provided with a clamping arm.

According to some embodiments of this application, the other end of the clamping assembly is provided with a battery support member that is telescopic relative to the clamping assembly, and the battery support member is located below the clamping arm.

According to some embodiments of this application, the other end of the clamping assembly is provided with a switch pressing member.

According to some embodiments of this application, the drone hangar further includes an electrical system, wherein the electrical system is communicatively connected to the battery swapping mechanism and the landing platform separately, the charging compartment includes a plurality of battery slots and a charging controller, and the charging controller is communicatively connected to the electrical system and the plurality of battery slots separately; and/or, a battery temperature sensor is disposed on the charging compartment.

According to some embodiments of this application, a heat exchange apparatus is disposed on one side of the charging compartment that is away from the hangar door.

According to some embodiments of this application, the hangar body includes: a housing, wherein the opening is formed on the housing, and the hangar compartment is jointly defined by the housing and the hangar door; and a hangar frame, wherein the hangar frame is disposed in the housing, and both the landing platform and the battery swapping mechanism are disposed on the hangar frame.

According to some embodiments of this application, the housing is a nylon member; and/or, the hangar frame is a hollow aluminum profile member.

According to some embodiments of this application, the housing is a double-layer structural member with a hollow interior.

According to some embodiments of this application, an air inlet is formed on one side of the housing that is away from the opening, and a dust filter screen is disposed at the air inlet.

According to some embodiments of this application, a sealing member is disposed between the hangar door and the opening.

A vehicle according to an embodiment of a second aspect of this application includes the drone hangar according to the foregoing embodiment of the first aspect of this application.

Additional aspects and advantages of this application are in part described in the following descriptions and in part become apparent in the following descriptions or are learned through practice of this application.

### DESCRIPTION OF DRAWINGS

The foregoing and/or additional aspects and advantages of this application become apparent and readily understandable from descriptions of embodiments in conjunction with the accompanying drawings.
FIG. 1 is an exploded view of a drone hangar according to an embodiment of this application;
FIG. 2 is an enlarged view of part D circled in FIG. 1;
FIG. 3 is an enlarged view of part E circled in FIG. 1;
FIG. 4 is a diagram of a hangar body of a drone hangar according to an embodiment of this application;
FIG. 5 is an enlarged view of part F circled in FIG. 4;
FIG. 6 is an assembly diagram of a hangar frame, a landing platform, a battery swapping mechanism, an electrical system, and a motion mechanism of a drone hangar according to an embodiment of this application;
FIG. 7 is an enlarged view of part G circled in FIG. 6;
FIG. 8 is an enlarged view of part H circled in FIG. 6;
FIG. 9 is an enlarged view of part I circled in FIG. 6;
FIG. 10 is a diagram of a motion mechanism of a drone hangar according to an embodiment of this application;
FIG. 11 is a diagram of a landing platform and a centering mechanism of a drone hangar according to an embodiment of this application;
FIG. 12 is a diagram of another state of a centering mechanism of a drone hangar according to an embodiment of this application, where a first opening is opened;
FIG. 13 is a diagram of cooperation between a gimbal fixing mechanism of a drone hangar and a drone according to an embodiment of this application;
FIG. 14 is a diagram of a battery swapping mechanism of a drone hangar according to an embodiment of this application;
FIG. 15 is a diagram of a rotating assembly of a drone hangar according to an embodiment of this application;
FIG. 16 is a diagram of a clamping assembly of a drone hangar according to an embodiment of this application;
FIG. 17 is a diagram of a hangar frame of a drone hangar according to an embodiment of this application;
FIG. 18 is a diagram of an electrical system of a drone hangar according to an embodiment of this application;
FIG. 19 is a diagram of an opening and closing mechanism of a drone hangar according to an embodiment of this application;
FIG. 20 is a diagram of a drone according to an embodiment of this application;
FIG. 21 is a diagram of a drone according to an embodiment of this application from another perspective;
FIG. 22 is a diagram of cooperation between a clamping assembly of a drone hangar and a battery of a drone according to an embodiment of this application;
FIG. 23 is a top view of cooperation between a clamping assembly of a drone hangar and a battery of a drone according to an embodiment of this application;
FIG. 24 is a diagram of another state of cooperation between a clamping assembly of a drone hangar and a battery of a drone according to an embodiment of this application;
FIG. 25 is a top view of another state of cooperation between a clamping assembly of a drone hangar and a battery of a drone according to an embodiment of this application;
FIG. 26 is a partial block diagram of a drone hangar according to an embodiment of this application; and
FIG. 27 is a block diagram of a vehicle according to an embodiment of this application.

Reference numerals:
1000: vehicle;
100: drone hangar;
1: hangar; 11: hangar body; 111: opening; 112: housing; 1121: air inlet; 1122: dust filter screen; 113: hangar frame; 12: hangar door; 121: sealing member; 13: hangar compartment; 131: charging compartment; 1311: battery slot; 1312: heat exchange apparatus; 1313: charging controller; 1314: battery temperature sensor;
2: landing platform; 21: fitting member; 22: first opening; 221: opening and closing member; 23: gimbal fixing mechanism;
3: battery swapping mechanism; 31: battery swapping mechanism body; 311: second driving member; 32: rotating assembly; 33: clamping assembly; 331: clamping arm; 332: battery support member; 333: switch pressing member;
4: electrical system;
5: motion mechanism; 51: motion mechanism body; 52: lifting assembly; 521: screw rod; 522: first driving member;
6: centering mechanism; 61: first clamping rod; 62: second clamping rod;
7: opening and closing mechanism; 71: hangar door guide rail; 72: motor;
200: drone; 201: landing gear; 202 and 203: camera gimbal; 204: battery switch button; 205: propeller.

### DETAILED DESCRIPTION OF EMBODIMENTS

Embodiments of this application are described in detail below, and embodiments described with reference to accompanying drawings are examples.

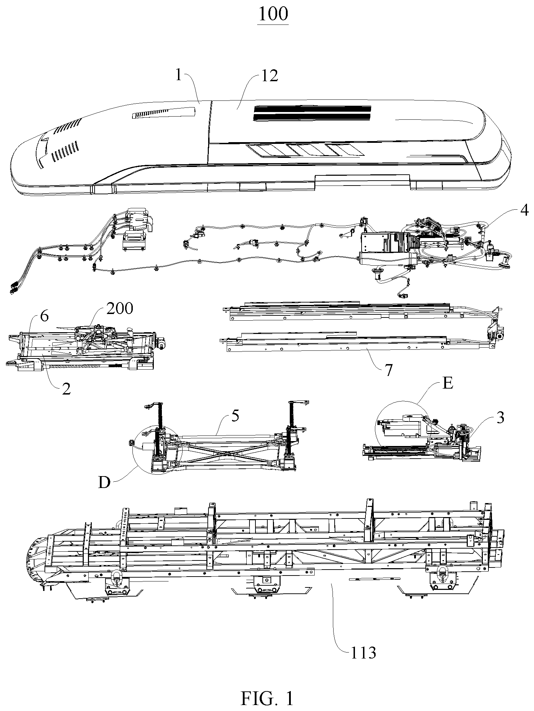

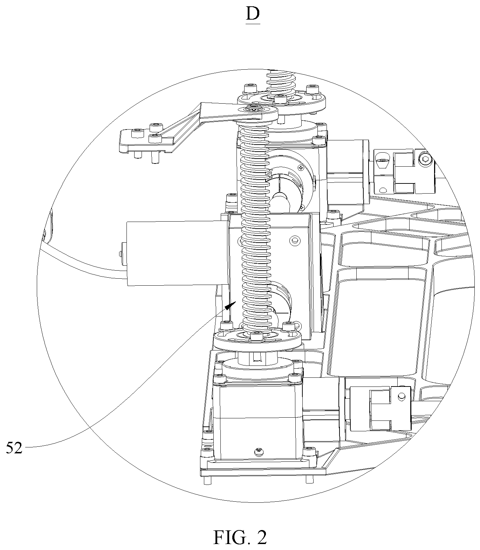

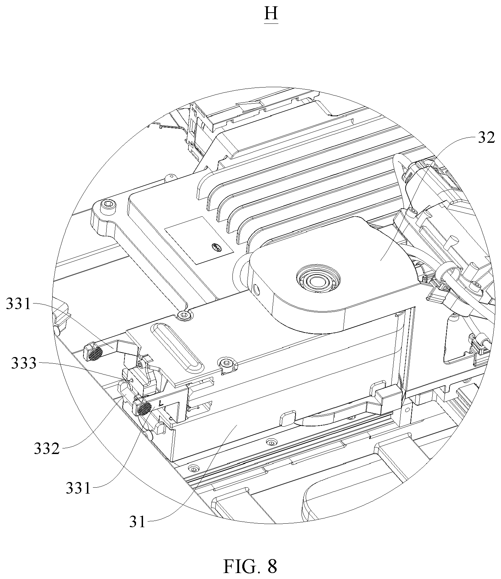

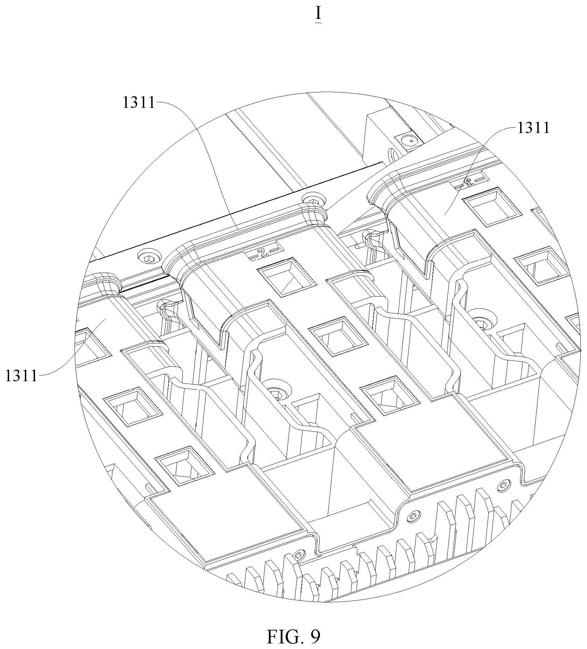

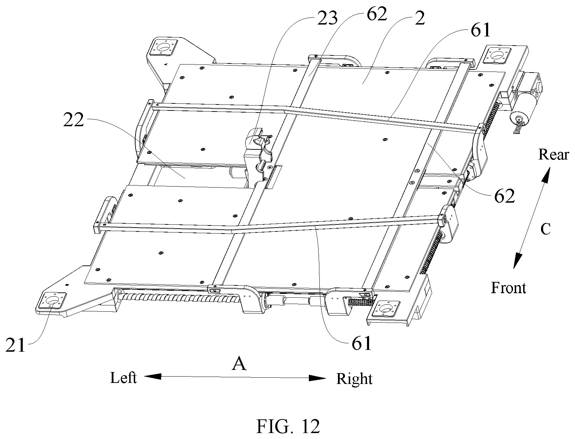

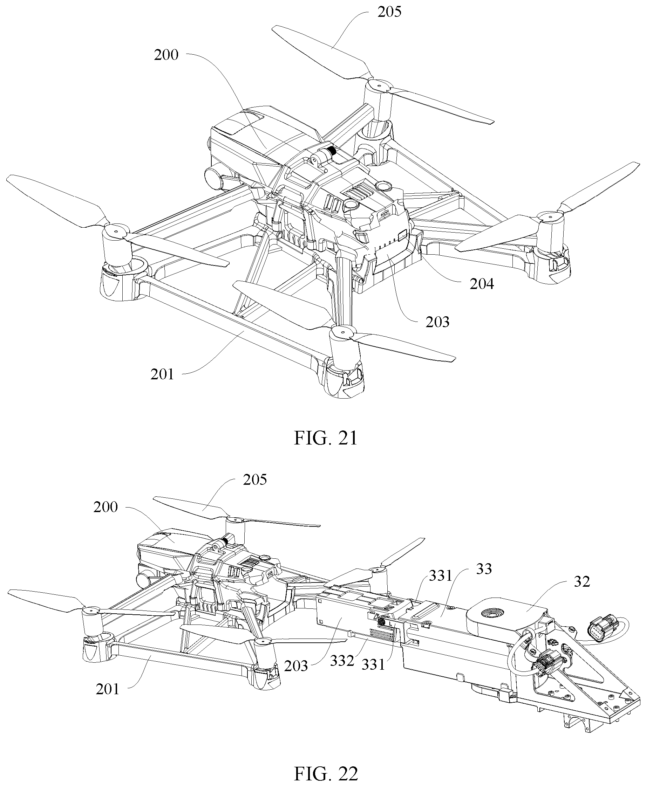

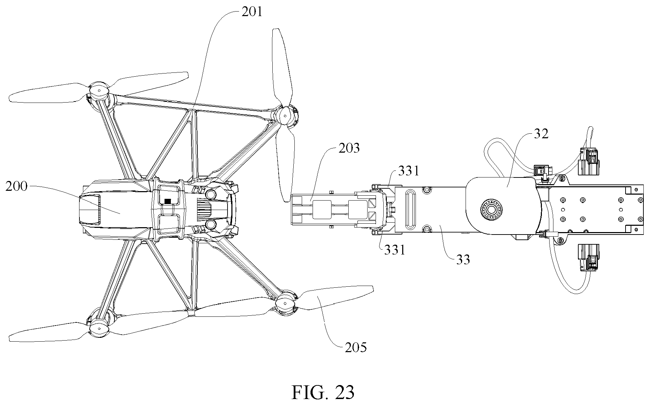

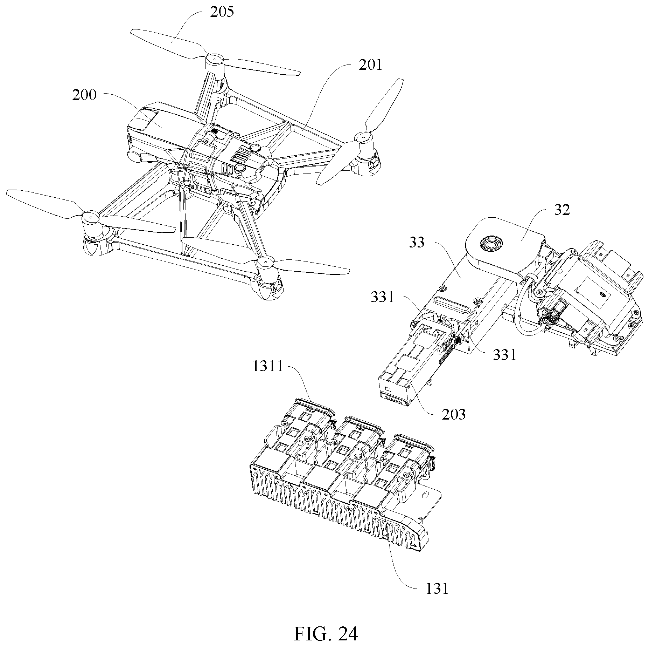

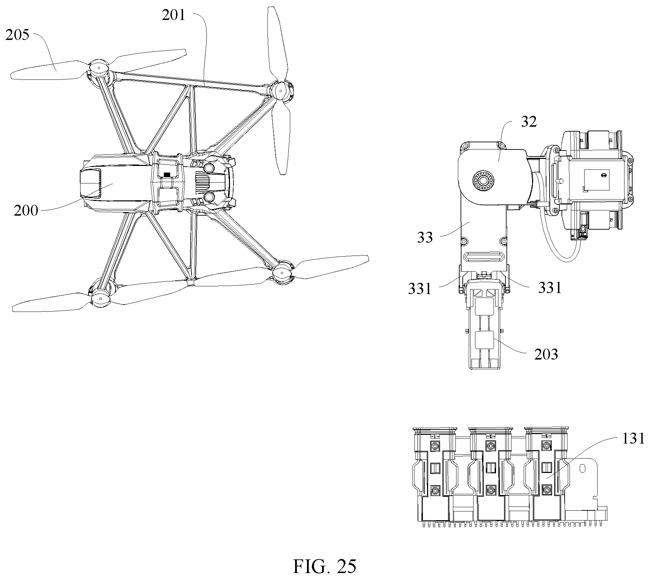

A drone hangar 100 according to an embodiment of a first aspect of the present disclosure is described below with reference to FIG. 1 to FIG. 26.

As shown in FIG. 1, FIG. 4, and FIG. 6, the drone hangar 100 according to the embodiment of the first aspect of this application includes a hangar 1, a landing platform 2, and a battery swapping mechanism 3.

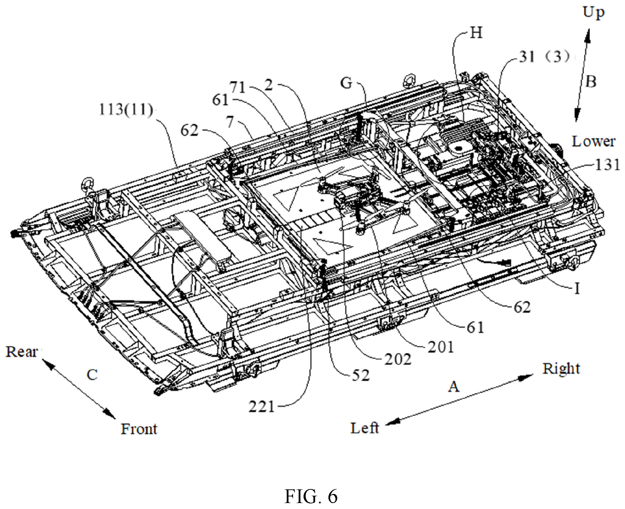

Specifically, the hangar 1 includes a hangar body 11 and a hangar door 12, where an opening 111 is formed on the hangar body 11, the hangar door 12 is movably disposed on the hangar body 11 to open and close the opening 111, and a hangar compartment 13 is jointly defined by the hangar body 11 and the hangar door 12. For example, in examples shown in FIG. 1, FIG. 4, and FIG. 6, the hangar door 12 can move relative to the hangar body 11 along a length direction of the hangar body 11 (for example, a direction indicated by arrow A in FIG. 6) to open and close the opening 111. Certainly, the hangar door 12 may also be disposed to be rotatable relative to the hangar body 11 to open and close the opening 111. In this way, a drone 200 may be placed in the hangar compartment 13, and the hangar compartment 13 may also be used for mounting other components, so that an appearance of the hangar body 11 is relatively simple, and the hangar 1 is more aesthetically pleasing. Further, the drone 200 can fly out of the hangar 1 through the opening 111, or return from the outside of the hangar 1 into the hangar compartment 13 through the opening 111.

In conjunction with FIG. 1, FIG. 4 and FIG. 6, the landing platform 2 and the battery swapping mechanism 3 are disposed side by side in the hangar compartment 13, the landing platform 2 is opposite to the opening 111, while the battery swapping mechanism 3 is staggered from the opening 111. For example, in the example shown in FIG. 6, the battery swapping mechanism 3 is vertically staggered from the opening 111, and the battery swapping mechanism 3 is located at one end in the hangar compartment 13 that is close to a length direction of the hangar 1. When the drone 200 is ready to take off or land, the landing platform 2 moves toward a direction of the opening 111 to facilitate takeoff or landing of the drone 200. After the drone 200 returns to the hangar compartment 13 due to insufficient electric quantity, the battery swapping system replaces a battery 203 of the drone 200. In this way, the landing platform 2 and the battery swapping mechanism 3 are arranged reasonably. In addition, the battery swapping mechanism 3 can assist in completing functions such as automatic battery swapping and power on/off of the drone 200. Moreover, a combined action of the landing platform 2 and the battery swapping mechanism 3 enriches functions of the drone hangar 100 and makes the use more convenient, thereby improving service performance of the drone hangar 100.

According to the drone hangar 100 provided by an embodiment of this application, the landing platform 2 and the opening 111 are oppositely disposed in the hangar compartment 13, so that the drone 200 can directly take off and land through the opening 111, which is conducive to the use of the drone 200 and also improves service performance of the drone hangar 100. In addition, a combined action of the landing platform 2 and the battery swapping mechanism 3 is conducive to a battery swapping operation of the drone 200, so that the drone hangar 100 has richer functions and is more convenient to use, and service performance of the drone hangar 100 is further improved.

With reference to FIG. 1, FIG. 4, and FIG. 6, the landing platform 2 is movably disposed in the hangar compartment 13 relative to the opening 111. With such arrangement, the landing platform 2 can be used for the landing of the drone 200. As the landing platform 2 can move relative to the opening 111, when the opening 111 is opened, the landing platform 2 can move to the opening 111, so that the drone 200 on the landing platform 2 can take off from the adjacent opening 111, and the drone 200 is less susceptible to interference from turbulence inside the hangar compartment 13 during takeoff. When the drone 200 returns, the drone 200 can directly land on the landing platform 2 adjacent to the opening 111. Compared with a mode that the drone 200 lands directly inside the hangar compartment 13, the drone 200 is also less susceptible to interference from the turbulence inside the hangar compartment 13 during landing, so that takeoff and landing of the drone 200 are convenient, the use of the drone 200 is more convenient, and service performance of the drone hangar 100 is further improved.

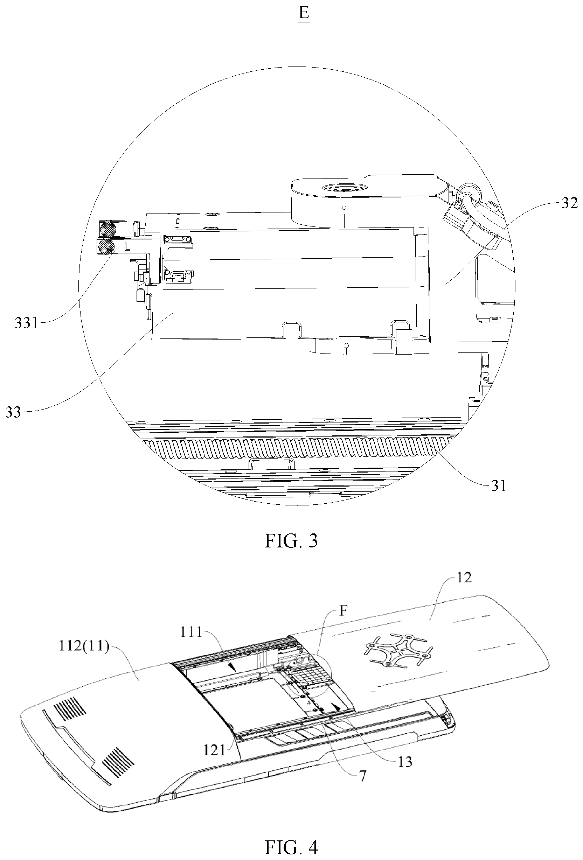

According to some embodiments of this application, with reference to FIG. 1, FIG. 4, and FIG. 6, the opening 111 is formed at the top of the hangar body 11, the landing platform 2 is opposite to the opening 111, and the landing platform 2 can move up and down relative to the hangar 1. For example, in the example shown in FIG. 4, the opening 111 extends through a top surface of the hangar body 11, the landing platform 2 is located at a position in the hangar compartment 13 that is opposite to the opening 111, and the landing platform 2 can move close to and away from the opening 111 in a vertical direction (for example, a direction indicated by arrow B in FIG. 6). When the landing platform 2 moves upward, the landing platform 2 can move to a plane where the opening 111 is located, so that the drone 200 located on the landing platform 2 is completely exposed. When the drone 200 takes off, the drone 200 can take off directly from the plane where the opening 111 is located, and there is no obstruction interference (for example, an inner wall of the hangar compartment 13) around the drone 200 during takeoff. Similarly, when the drone 200 returns, the drone 200 can directly land on the landing platform 2 that is coplanar with the plane where the opening 111 is located, and then the drone 200 is recovered to the hangar compartment 13 with the movement of the landing platform 2. In a process that the landing platform 2 moves away from the opening 111, the drone 200 and the landing platform 2 are relatively stationary. In this way, during takeoff or landing of the drone 200, the turbulence is less likely to form inside the hangar compartment 13, and the drone 200 is less susceptible to the influence of the inner wall of the hangar compartment 13 and an airflow in the hangar compartment 13, thereby reducing the impact of the turbulence on the drone 200. This can also effectively prevent the drone 200 from colliding with the inner wall of the hangar compartment 13 during takeoff and landing, which is more conducive to the use of the drone 200 and further improves service performance of the drone hangar 100.

Further, in conjunction with FIG. 1, FIG. 2, FIG. 4, and FIG. 6, the drone hangar 100 includes a motion mechanism 5, where the motion mechanism 5 is disposed in the hangar compartment 13, and the motion mechanism 5 cooperates with the landing platform 2 to drive the landing platform 2 to move close to and away from the opening 111. For example, in the examples shown in FIG. 1, FIG. 4, and FIG. 6, the landing platform 2 is approximately rectangular in shape, the landing platform 2 may be disposed on an inner peripheral side of the motion mechanism 5, and four apexes of the landing platform 2 cooperate with the motion mechanism 5 to drive the landing platform 2 to lift and lower, making the landing platform 2 move close to and away from the opening 111. Certainly, the motion mechanism 5 may also be disposed below the landing platform 2 to support and drive the landing platform 2 to move. This application is not limited to the foregoing two connection modes. In this way, the motion mechanism 5 can achieve movement of the landing platform 2, so that the drone 200 on the landing platform 2 can move close to and away from the opening 111. During takeoff or landing of the drone 200, to prevent an airflow generated by rotation of propellers 205 of the drone 200 from being reflected by the inner wall of the hangar compartment 13 to form turbulence which interferes with normal takeoff and landing of the drone 200, the landing platform 2 is lifted by the motion mechanism 5 to make a fuselage height of the drone 200 higher than inner walls around the hangar body 11, ensuring that there is no airflow turbulence interference during takeoff and landing of the drone 200. Further, the motion mechanism 5 can provide a driving force to the landing platform 2, so that the movement of the landing platform 2 is smoother. In addition, during takeoff and landing of the drone 200, to prevent the propellers 205 of the drone 200 from colliding with a periphery of the hangar body 11 due to a landing position error of the drone 200, the landing platform 2 is lifted by the motion mechanism 5 to make a fuselage of the drone 200 flush with the opening 111, so that the drone 200 can finish takeoff and landing outside the hangar 1.

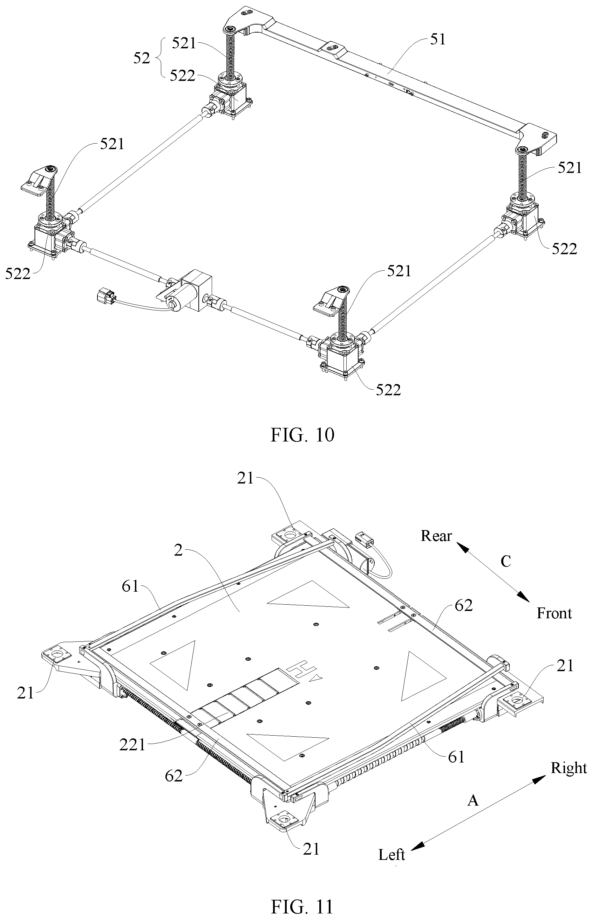

According to some embodiments of this application, with reference to FIG. 6 and FIG. 10, the motion mechanism 5 includes a motion mechanism body 51 and a plurality of lifting assemblies 52. The motion mechanism body 51 is disposed in the hangar compartment 13, the plurality of lifting assemblies 52 are disposed on the motion mechanism body 51, the plurality of lifting assemblies 52 are spaced apart along a circumferential direction of the motion mechanism body 51, the landing platform 2 is separately connected to the plurality of lifting assemblies 52, and the plurality of lifting assemblies 52 drive the landing platform 2 to move close to and away from the opening 111. In the description of the present disclosure, "a plurality of" means two or more.

For example, in examples shown in FIG. 6 and FIG. 10, there are four lifting assemblies 52, the four lifting assemblies 52 are connected to the hangar compartment 13 through the motion mechanism body 51, the four lifting assemblies 52 are arranged along the circumferential direction of the motion mechanism body 51, and the four lifting assemblies 52 form a rectangular space. The landing platform 2 is disposed on inner peripheral sides of the four lifting assemblies 52, and edges of the landing platform 2 are connected to the plurality of lifting assemblies 52, respectively. In this way, the lifting assembly 52 can achieve lifting and lowering of the landing platform 2 relative to the opening 111, that is, the lifting assembly 52 may drive the landing platform 2 to move toward a direction close to or away from the opening 111, thereby facilitating takeoff and landing of the drone 200. For example, the lifting assembly 52 may drive the landing platform 2 to move in a vertical direction by using a lead screw. The lifting assembly 52 may also be a cylinder, and a piston rod of the cylinder drives the landing platform 2 to move, so that movement of the landing platform 2 can be achieved through a simple structure and logic, but this application is not limited thereto.

According to some embodiments of this application, in conjunction with FIG. 1, the drone hangar 100 further includes an electrical system 4, where the electrical system 4 is communicatively connected to the battery swapping mechanism 3 and the landing platform 2 separately. In this way, the electrical system 4 is configured to implement power supply of each electrical device in the hangar 1, control of each drive apparatus, imaging, lighting and image transmission inside the hangar 1, in-place detection of each motion mechanism 5, heat dissipation/electric quantity detection/temperature control of the battery 203 of the drone 200, and other key functions.

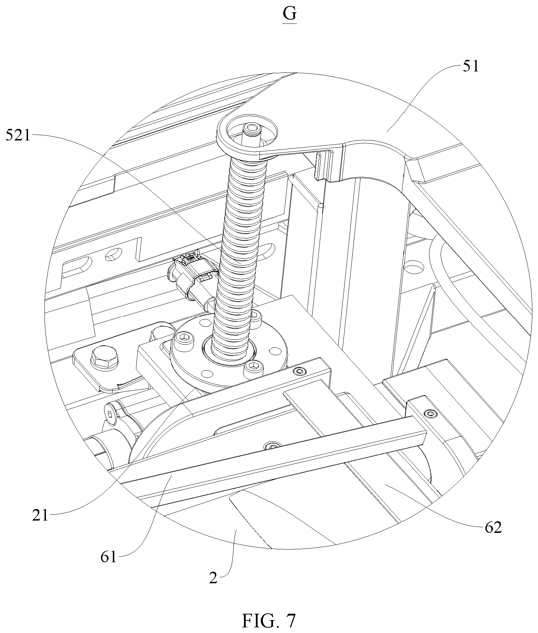

In conjunction with FIG. 7 and FIG. 10, a plurality of fitting members 21 are disposed on the landing platform 2, and the plurality of fitting members 21 are spaced apart along a circumferential direction of the landing platform 2. Each lifting assembly 52 includes a screw rod 521 and a first driving member 522, where the screw rod 521 is connected to the motion mechanism body 51, the screw rod 521 extends along an axial direction of the opening 111, the fitting member 21 is in threaded engagement with the screw rod 521, the first driving member 522 is connected to the screw rod 521, and the electrical system 4 is communicatively connected to the first driving member 522.

For example, in examples shown in FIG. 7 and FIG. 10, four fitting members 21 are disposed on the landing platform 2, the four fitting members 21 are located at four apexes of the landing platform 2, and each fitting member 21 is sleeved on an outer periphery of the screw rod 521 at a corresponding position and is threaded to the screw rod 521. One lifting assembly 52 is used as an example for description. The screw rod 521 extends along a vertical direction. The screw rod 521 is connected to the motion mechanism body 51 and is rotatable relative to the motion mechanism body 51 along a central axis of the screw rod 521, and a lower end of the screw rod 521 is connected to the first driving member 522. When the electrical system 4 controls the first driving member 522 to operate, the first driving member 522 may drive the screw rod 521 to rotate, and during rotation, the screw rod 521 may drive the fitting member 21 that cooperates with the screw rod 521 to move upward along an extension direction of the screw rod 521. The plurality of fitting members 21 move upwards synchronously to drive the landing platform 2 to move close to the opening 111. When the drone 200 returns to land on the landing platform 2, the landing platform 2 can be moved downward away from the opening 111 under the gravity of the drone 200. In this way, a combined action of the first driving member 522, the screw rod 521, and the fitting member 21 may implement movement of the landing platform 2 in the vertical direction to be close to or away from the opening 111, thereby facilitating lifting and lowering of the landing platform 2. In addition, the lifting assembly 52 is simple in structure and low in use cost, so that a structure of the drone hangar 100 is simplified, production and processing of the drone hangar 100 are convenient, and a production cost of the drone hangar 100 is reduced. For example, the first driving member 522 may be configured as a driving motor or a cylinder. An output shaft of the driving motor is fixed to a lower end of the screw rod 521 to drive the screw rod 521 to rotate. The driving motor has stable driving force and is simple in operation, thereby further facilitating the lifting and lowering of the landing platform 2 by the lifting assembly 52, but this application is not limited thereto.

Further, in conjunction with FIG. 6, FIG. 11, and FIG. 12, the drone hangar 100 includes a centering mechanism 6, where the centering mechanism 6 is disposed on the landing platform 2, and the centering mechanism 6 is movable relative to the landing platform 2 to move toward or away from the center of the landing platform 2. For example, in examples shown FIG. 6, FIG. 11, and FIG. 12, the centering mechanism 6 is disposed on one side of the landing platform 2 that faces the opening 111. When the centering mechanism 6 moves toward the center of the landing platform 2, the centering mechanism 6 may clamp a landing gear 201 of the drone 200 after moving to make contact with the landing gear 201 of the drone 200, so that the drone 200 can stably land on the landing platform 2. When the centering mechanism 6 moves away from the center of the landing platform 2, the centering mechanism 6 is separated from the landing gear 201 of the drone 200 to release the drone 200. In this way, the centering mechanism 6 is disposed to improve connection stability between the drone 200 and the landing platform 2, so that during lifting and lowering of the landing platform 2, the drone 200 can remain stable to reduce sliding of the drone 200 on the surface of the landing platform 2. This reduces collision between the drone 200 and the hangar compartment 13 and then prolongs a service life of the drone 200. Further, the centering mechanism 6 helps the resetting of the drone 200, that is, when the drone 200 lands on an edge of the landing platform 2, the centering mechanism 6 helps the drone 200 move to a position close to the center of the landing platform 2, thereby facilitating takeoff, landing, battery swapping, and other operations of the drone 200, and also ensuring a success rate of automatic battery swapping and power on/off operations of the drone 200.

According to some embodiments of this application, with reference to FIG. 6, FIG. 11, and FIG. 12, the centering mechanism 6 includes two first clamping rods 61 and two second clamping rods 62. The first clamping rods 61 extend along a length direction of the hangar 1 (for example, a left-right direction in FIG. 6), the two first clamping rods 61 are spaced apart along a width direction of the hangar 1 (for example, a direction indicated by arrow C in FIG. 6, that is, a front-rear direction), and the two first clamping rods 61 can move close to or away from each other along the width direction of the hangar 1. The two second clamping rods 62 extend along the width direction of the hangar 1, the two second clamping rods 62 are spaced apart along the length direction of the hangar 1, and the two second clamping rods 62 can move close to or away from each other along the length direction of the hangar 1.

For example, in examples shown in FIG. 11 to FIG. 13, the two first clamping rods 61 are located on both sides of the landing platform 2 in the front-rear direction, respectively, and the two first clamping rods 61 can move toward or away from the center of the landing platform 2. The two second clamping rods 62 are located on both sides of the landing platform 2 in the left-right direction, respectively, and the two second clamping rods 62 can move toward or away from the center of the landing platform 2. The two first clamping rods 61 and the two second clamping rods 62 are staggered along a circumferential direction of the landing platform 2. With such arrangement, when the two first clamping rods 61 move close to each other and the two second clamping rods 62 also move close to each other, the two first clamping rods 61 and the two second clamping rods 62 can act together to clamp the landing gear 201 of the drone 200, so that the drone 200 can stably land on the landing platform 2, thereby preventing the drone 200 from being damaged by shaking, and facilitating automatic battery swapping and power on/off operations of the battery swapping mechanism 3. When the two first clamping rods 61 move away from each other and the two second clamping rods 62 also move away from each other, the first clamping rod 61 and the second clamping rod 62 are separated from the landing gear 201 of the drone 200 to release the drone 200, so that the drone 200 can take off from the landing platform 2. In addition, the first clamping rod 61 and the second clamping rod 62 have simple structure and are low in use cost, so that a structure of the drone hangar 100 is simplified, and a production cost of the drone hangar 100 is reduced.

Optionally, a clearance hole (not shown in the figure) is formed on the landing gear 201 of the drone 200 to provide clearance for an obstacle-avoidance camera (not shown in the figure) and a sensor (not shown in the figure) on the fuselage of the drone 200. The landing gear 201 employs a quick-release structure, which not only does not affect daily use of the drone 200, but also enhances overall strength, stiffness, reliability, and other performance of the drone 200, with an attractive appearance and convenient assembly and disassembly.

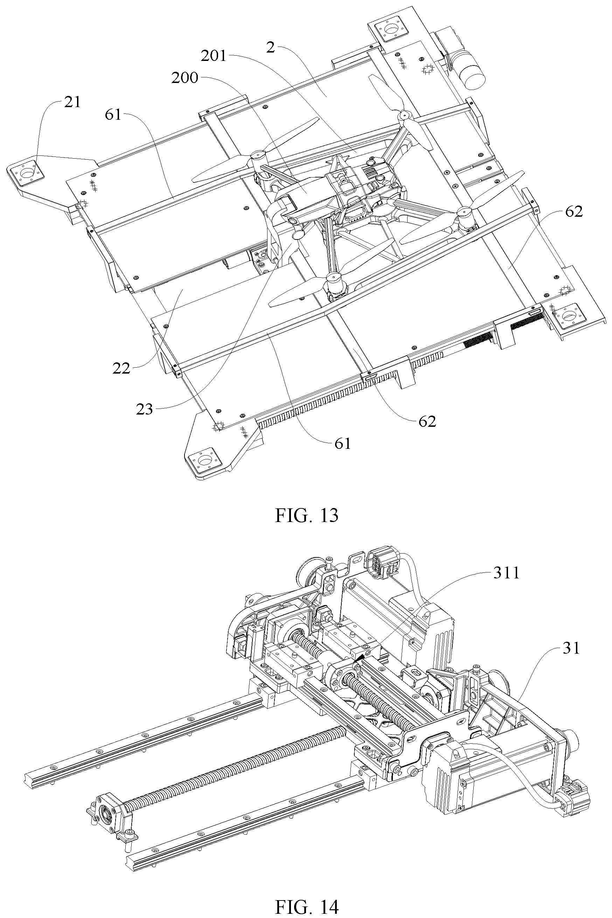

According to some embodiments of this application, with reference to FIG. 11 to FIG. 13, a first opening 22 is formed on the landing platform 2, a gimbal fixing mechanism 23 is disposed on one side of the landing platform 2 that is away from the opening 111, and the gimbal fixing mechanism 23 is opposite to the first opening 22. When the centering mechanism 6 moves toward the center of the landing platform 2, a part of the gimbal fixing mechanism 23 passes through the first opening 22. For example, in examples shown in FIG. 6 and FIG. 13, a camera gimbal 202 is disposed on one side of the drone 200 that is close to the first opening 22, the first opening 22 extends through the landing platform 2 in a vertical direction, and the gimbal fixing mechanism 23 is disposed below the first opening 22. When the centering mechanism 6 moves toward the center of the landing platform 2, a part of the gimbal fixing mechanism 23 rotates upwards and extends out from the first opening 22 to snap onto the camera gimbal 202 of the drone 200, so that the gimbal fixing mechanism 23 can protect and fix the camera gimbal 202. When the centering mechanism 6 moves away from the center of landing platform 2, the above-mentioned part of the gimbal fixing mechanism 23 rotates downwards and retreats from the first opening 22 to below the first opening 22, and the gimbal fixing mechanism 23 is separated from the camera gimbal 202 to facilitate the separation of the drone 200 from the landing platform 2. As the camera gimbal 202 of the drone 200 is connected by a flexible structure, it cannot satisfy various vibration and impact conditions when the drone hangar 100 is mounted on a vehicle. The gimbal fixing mechanism 23, by linking with the centering mechanism 6, can protect the camera gimbal 202 during takeoff and landing of the drone 200, thereby reducing damage to the drone 200, prolonging a service life of the drone 200, and improving service performance of the drone hangar 100. In addition, the drone 200 can satisfy various automotive-grade performance (structural strength, stiffness, durability, NVH, EMC, and the like), and the drone 200 adapts to the drone hangar 100 to meet various automotive-grade performance indicators.

According to some embodiments of this application, in conjunction with FIG. 11, an opening and closing member 221 is disposed at the first opening 22, and the opening and closing member 221 is connected to one of the two second clamping rods 62. The second clamping rod 62 drives the opening and closing member 221 to move along the length direction of the hangar 1 to open and close the first opening 22. When the centering mechanism 6 moves toward the center of the landing platform 2, the opening and closing member 221 opens the first opening 22, and when the centering mechanism 6 moves away from the center of the landing platform 2, the opening and closing member 221 closes the first opening 22.

For example, in the example shown in FIG. 11, the opening and closing member 221 is approximately rectangular in shape, and a left side of the opening and closing member 221 is connected to the second clamping rod 62 on an upper left side of the landing platform 2. When the second clamping rod 62 moves rightward to approach the drone 200, the left side of the opening and closing member 221 moves rightward in synchronization with the movement of the second clamping rod 62 under the action of the second clamping rod 62 to open the first opening 22. In the process of gradually opening the first opening 22, the foregoing part of the gimbal fixing mechanism 23 protrudes from the first opening 22. When the second clamping rod 62 cooperates with the landing gear 201 of the drone 200, the gimbal fixing mechanism 23 cooperates with the camera gimbal 202. When the second clamping rod 62 connected to the opening and closing member 221 moves leftward to be away from the drone 200, the left side of the opening and closing member 221 moves leftward in synchronization with the movement of the second clamping rod 62 under the action of the second clamping rod 62 to close the first opening 22. Before the second clamping rod 62 moves leftward, the gimbal fixing mechanism 23 is separated from the camera gimbal 202, and rotates downward to retreat to a position below the first opening 22. With such arrangement, the gimbal fixing mechanism 23 is linked with the centering mechanism 6 through the opening and closing member 221, which can not only prevent centering and fixing failure of the centering mechanism 6 caused by a situation that the landing gear 201 of the drone 200 falls into the first opening 22 on the landing platform 2 during landing, but also protect the camera gimbal 202 during takeoff and landing of the drone 200. In addition, the opening and closing member 221 has a simple structure and is convenient to use, and also makes the surface of the landing platform 2 more aesthetically pleasing.

According to some embodiments of this application, with reference to FIG. 1, FIG. 6, FIG. 9, and FIG. 18, a charging compartment 131 is disposed in the hangar compartment 13. The charging compartment 131 may be configured to accommodate a battery 203 of the drone 200, and may implement charging of the battery 203, thereby facilitating normal use of the drone 200. The battery swapping mechanism 3 includes a battery swapping mechanism body 31, a rotating assembly 32, and a clamping assembly 33. Specifically, the battery swapping mechanism body 31 is disposed in the hangar compartment 13, a second driving member 311 is disposed on the battery swapping mechanism body 31, the rotating assembly 32 is connected to the battery swapping mechanism body 3, the rotating assembly 32 is adjacent to the charging compartment 131, and the rotating assembly 32 is connected to the second driving member 311. When the second driving member 311 operates, the second driving member 311 drives the rotating assembly 32 to move between the charging compartment 131 and the landing platform 2. One end of the clamping assembly 33 is rotatably connected to the rotating assembly 32, and the other end of the clamping assembly 33 is provided with a clamping arm 331.

For example, in examples shown in FIG. 6 and FIG. 14 to FIG. 16, the battery swapping mechanism body 31 is located at one end in a length direction of the hangar compartment 13 (for example, a right end of the hangar compartment 13 in FIG. 6), a right end of the rotating assembly 32 is connected to the second driving member 311 on the battery swapping mechanism body 31, the second driving member 311 may drive the rotating assembly 32 to move between the charging compartment 131 and the landing platform 2 relative to the battery swapping mechanism body 31, and a left end of the rotating assembly 32 is connected to a right end of the clamping assembly 33. The clamping assembly 33 is rotatable relative to the rotating assembly 32 along a central axis of a connection portion, that is, the clamping assembly 33 can rotate in a plane perpendicular to the vertical direction. A left end of the clamping assembly 33 can clamp the battery 203 of the drone 200 through the clamping arms 331. The other end of the clamping assembly 33 is provided with two clamping arms 331, and the two clamping arms 331 are spaced apart along a width direction of the clamping assembly 33. For example, in conjunction with FIG. 6, the charging compartment 131 is located at a front side of the hangar compartment 13, and the battery swapping mechanism 3 is located at the right end of the hangar compartment 13 and adjacent to the hangar compartment 13.

When the drone 200 lands on the landing platform 2 and requires battery 203 replacement, the second driving member 311 drives the rotating assembly 32 to move the clamping assembly 33 toward the landing platform 2, and the battery 203 is then removed from the drone 200 through the clamping arms 331. Then, the second driving member 311 drives the rotating assembly 32 to move the clamping assembly 33 away from the landing platform 2, and when the rotating assembly 32 moves to a position substantially opposite to the hangar compartment 13 in a front-rear direction, after the clamping assembly 33 rotates by a certain angle (for example, 90°) relative to the rotating assembly 32, the clamping assembly 33 and the charging compartment 131 are opposite in the front-rear direction. Then, the second driving member 311 drives the rotating assembly 32 to move the clamping assembly 33 toward the charging compartment 131, so that the battery 203 clamped by the clamping arms 331 can be smoothly inserted into the charging compartment 131. In addition, the clamping arms 331 can clamp a battery 203 to take out the battery 203 fully charged in the charging compartment 131, and the second driving member 311 drives the rotating assembly 32 to move the clamping assembly 33 backward. When the rotating assembly 32 moves to a position opposite to a left-right direction of the drone 200, after the clamping assembly 33 rotates by a certain angle relative to the rotating assembly 32, the second driving member 311 drives the rotating assembly 32 to move the clamping assembly 33 leftward, so that the clamping assembly 33 can move in a direction close to the drone 200 to mount the battery 203 on the drone 200.

With such arrangement, a combined action of the clamping assembly 33, the rotating assembly 32 and the second driving member 311 can take out the battery 203 from the drone 200 and place the battery 203 in the charging compartment 131 for charging, or can take out the battery 203 in the charging compartment 131 and mount the battery 203 on the drone 200, thereby implementing automatic battery swapping of the drone 200, with simple battery swapping operation and simple control logic of battery swapping. A user may control automatic battery swapping of the drone 200 by one button in a vehicle, which is further conducive to the use of the drone 200, enriches functions of the drone hangar 100, and improves service performance of the drone hangar 100. In addition, the clamping assembly 33 may not only clamp the battery 203, but also drive the battery 203 to move in the left-right direction. The rotating assembly 32 may drive the clamping assembly 33 to rotate to insert the battery 203 into a battery swapping compartment smoothly. Moreover, the battery swapping mechanism 3 drives the battery 203 to move between the landing platform 2 and the charging compartment 131 with a relatively short path, which effectively reduces a movement stroke of the battery swapping operation, thereby reducing an overall spatial size of the drone hangar 100 and effectively achieving lightweight design and cost reduction of the drone hangar 100. This may also improve battery swapping efficiency of the battery swapping mechanism 3 and further improve service performance of the drone hangar 100. Further, a combined action of the clamping assembly 33 and the rotating assembly 32 can achieve switching of the battery 203 of the drone 200 between the left-right direction and the front-rear direction to assist in completing automatic battery swapping and power on/off functions of the drone 200.

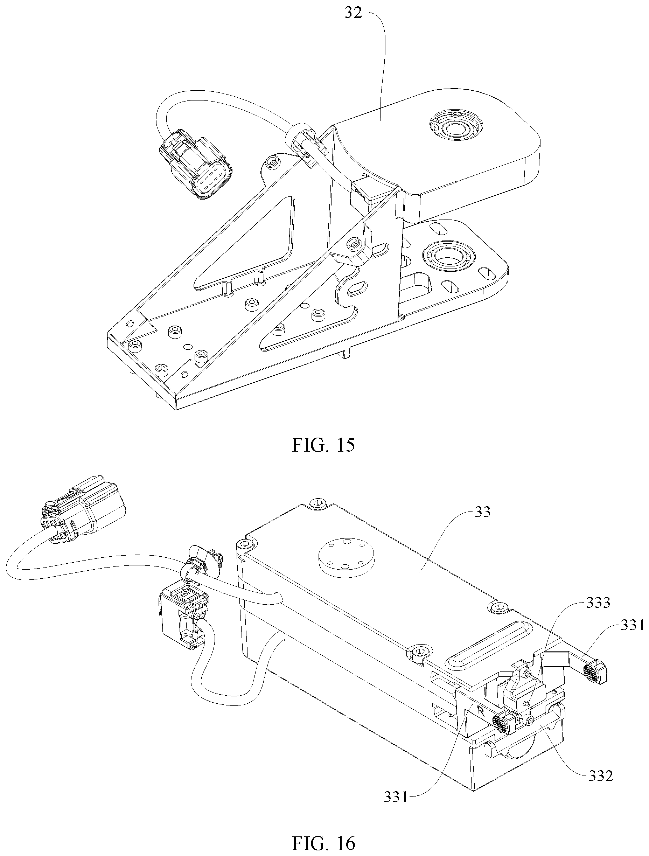

According to some embodiments of this application, in conjunction with FIG. 16, the other end of the clamping assembly 33 is provided with a battery support member 332 that is telescopic relative to the clamping assembly 33, and the battery support member 332 is located below the clamping arm 331. For example, in an example shown in FIG. 16, the battery support member 332 is disposed in the clamping assembly 33, and the battery support member 332 is movable relative to the clamping assembly 33 from a left end of the clamping assembly 33 in a direction away from the clamping assembly 33. When the clamping arms 331 clamp the battery 203, a cantilever length is relatively long and stiffness at a clamping distal end is poor. The battery support member 332, after extending out from the clamping assembly 33, can support the battery 203, thereby enhancing connection stability between the clamping assembly 33 and the battery 203, facilitating movement of the battery 203 between the drone 200 and the charging compartment 131, and further ensuring smooth charging of the battery 203 of the drone 200. When the clamping arms 331 are separated from the battery 203, the battery support member 332 retreats into the clamping assembly 33, so that a space occupied by the battery support member 332 in the hangar compartment 13 is reduced.

Further, with reference to FIG. 16, the other end of the clamping assembly 33 is provided with a switch pressing member 333. For example, in the example shown in FIG. 16, the switch pressing member 333 is located below and between the two clamping arms 331. The battery 203 of the drone 200 is integrated with a switch button 204 of the drone 200. When the battery 203 is mounted on the drone 200 by the clamping assembly 33, and after the switch pressing member 333 presses the switch button 204, the drone 200 can be powered on. In addition, when the electric quantity of the battery 203 of the drone 200 is exhausted and the battery 203 needs to be replaced, after the clamping assembly 33 approaches the drone 200, the switch button 204 is first repeatedly pressed by the switch pressing member 333 to achieve a power-off operation of the drone 200. Then, the battery 203 is removed from the drone 200 by the clamping arms 331, so that the power on and power off operations of the drone 200 are simplified. In addition, a cooperative operation of the drone 200 and the drone hangar 100 is also simple, which is more beneficial for the user to control and operate the drone 200, improving service performance of the drone 200 and the drone hangar 100. Because the drone 200 belongs to a consumer-grade customized product with a fixed battery grasping mode of the battery 203, a fixed insertion/removal mode of the battery 203, and fixed power on/off operations of the drone 200, the clamping mechanism according to this application may adapt to a usage mode and an ergonomic structure of the consumer-grade drone 200 to complete power on/off of the drone 200 and clamping and supporting operations of the battery 203.

According to some embodiments of this application, in conjunction with FIG. 6, FIG. 9, FIG. 18, and FIG. 26, the charging compartment 131 includes a plurality of battery slots 1311 and a charging controller 1313, the charging controller 1313 is communicatively connected to the electrical system 4 and the plurality of battery slots 1311. For example, in examples shown in FIG. 6, FIG. 9, and FIG. 18, the charging compartment 131 includes three battery slots 1311, so that a plurality of batteries 203 can be accommodated in the charging compartment 131 at the same time. With such arrangement, a combined action of the electrical system 4 and the charging controller 1313 may achieve simultaneous charging, storing and electric quantity detection of the plurality of batteries 203 of the drone 200, thereby ensuring electric quantity of the battery 203 in the charging compartment 131. The battery 203 can be replaced with a fully charged battery 203 in a timely manner when the drone 200 needs battery swapping, and the depleted battery 203 can be placed in the battery slot 1311 for charging in time, thereby improving the battery swapping efficiency of the drone hangar 100. In addition, functions of the drone hangar 100 are further enriched, and service performance of the drone hangar 100 is further improved.

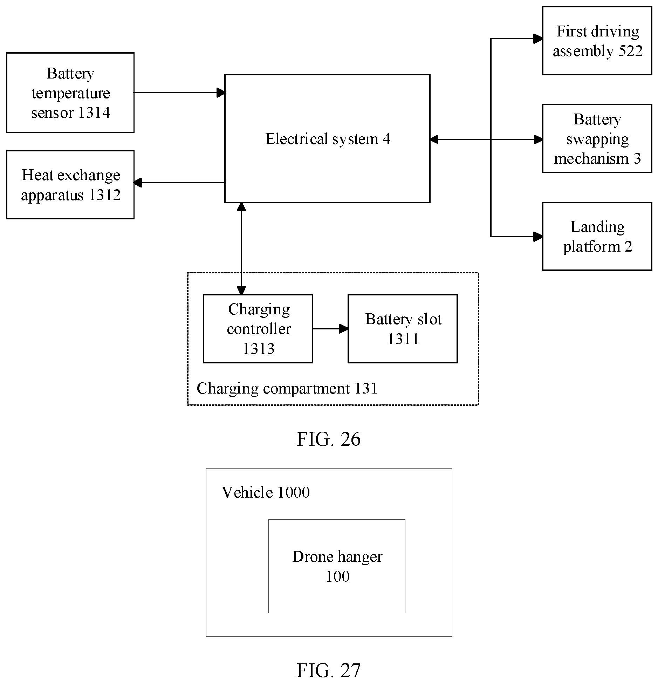

According to some other embodiments of this application, as shown in FIG. 26, a battery temperature sensor 1314 is disposed on the charging compartment 131. In this way, the battery temperature sensor 1314 may detect a temperature of the battery 203 in the charging compartment 131, and when the temperature of the battery 203 is too high during charging, temperature information of the battery 203 can be fed back to the user in time, thereby facilitating normal use of the battery 203, and also improving automation performance of the drone hangar 100.

According to still further embodiments of this application, with reference to FIG. 6, FIG. 9, FIG. 18, and FIG. 26, the charging compartment 131 includes a plurality of battery slots 1311 and a charging controller 1313, the charging controller 1313 is communicatively connected to the electrical system 4 and the plurality of battery slots 1311 separately, and a battery temperature sensor 1314 is disposed on the charging compartment 131. With such arrangement, the charging compartment 131 may implement charging, storage, and electric quantity detection of a plurality of batteries 203 to improve charging efficiency of the battery 203, and may also replace the battery 203 of the drone 200 with a fully charged battery 203 in time when drone needs battery swapping, thereby further facilitating use of the drone 200. For another, the battery temperature sensor 1314 may detect the temperature of the battery 203 in the charging compartment 131, and when the temperature of the battery 203 is too high during charging, the temperature information of the battery 203 can be fed back to the user in time, thereby facilitating normal use of the battery 203. Further, the drone hangar 100 integrates various motion mechanisms 5 (such as, the centering mechanism 6, the landing platform 2, the battery swapping mechanism 3, and the charging compartment 131) and functions, the functions of the drone hangar 100 are further enriched. In addition, the drone hangar 100 has an attractive appearance, powerful functions, and strong technological sense, so that use experience of the user is greatly improved.

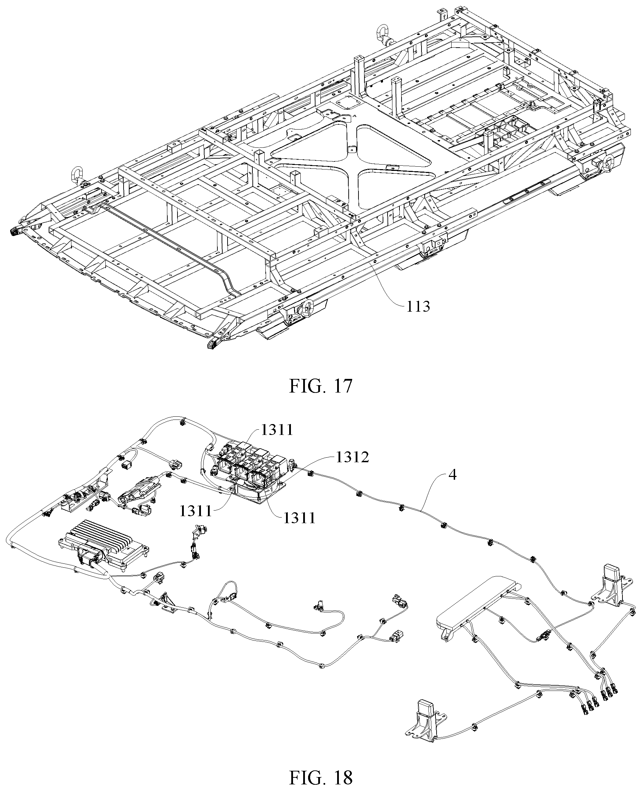

According to some embodiments of this application, in conjunction with FIG. 18 and FIG. 26, a heat exchange apparatus 1312 is disposed on one side of the charging compartment 131 that is away from the hangar door 12. For example, in an example shown in FIG. 18, the heat exchange apparatus 1312 is disposed below the charging compartment 131, and the heat exchange apparatus 1312 is opposite to the plurality of battery slots 1311 in a vertical direction. Because the battery 203 of the consumer-grade drone 200 has a strict environmental temperature requirement, an excessively high temperature may cause a service life of the battery 203 to decrease or cause a safety problem. In this way, when the battery temperature sensor 1314 detects that the temperature of the battery 203 in the battery slot 1311 is high, the heat exchange apparatus 1312 (for example, a heat dissipation fan) is enabled to effectively implement heat dissipation of the battery 203, thereby facilitating long-term use of the battery 203 and prolonging a service life of the battery 203.

According to some embodiments of this application, with reference to FIG. 4 and FIG. 6, the hangar body 11 includes a housing 112 and a hangar frame 113, the opening 111 is formed on the housing 112, and the hangar compartment 13 is jointly defined by the housing 112 and the hangar door 12. The hangar frame 113 is disposed in the housing 112. The landing platform 2, the battery swapping mechanism 3, and the electrical system 4 are disposed on the hangar frame 113. For example, in the examples shown in FIG. 4 and FIG. 6, the opening 111 is formed on an upper sidewall of the housing 112, the hangar door 12 is disposed at the opening 111 to open and close the opening 111, the hangar frame 113 is mounted at the bottom of the housing 112, and the hangar compartment 13 is jointly defined by the housing 112 and the hangar door 12, which may be configured to mount, place, and accommodate a plurality of components, so that an appearance of the housing 112 is relatively simple and exquisite. Further, the hangar frame 113 is provided to protect, assemble, and support other mechanisms such as the landing platform 2 and the battery swapping mechanism 3 in the hangar compartment 13, thereby facilitating long-term stable use of components such as the landing platform 2, the battery swapping mechanism 3, and the electrical system 4. Further, machining accuracy of the housing 112 and the hangar frame 113 is improved, the quality of the hangar body 11 is improved, and a service life of the hangar body 11 is prolonged. In addition, the hangar frame 113 effectively ensures that an overall structure of the drone hangar 100 meets performance requirements of strength, stiffness, reliability, water resistance, dust resistance, and the like under various operating conditions of the vehicle.

According to some optional embodiments of this application, the housing 112 is a nylon member; and/or, the hangar frame 113 is a hollow aluminum profile member. For example, the housing 112 may be configured as a high-strength nylon material member for protection, support, heat dissipation, and storage of components in the hangar compartment 13. In addition, the housing 112 has high strength, when the drone hangar 100 is mounted on the top of the vehicle, the drone hangar 100 may adapt to various different environments and operating conditions to facilitating normal use of the drone hangar 100. For example, when the hangar frame 113 is a hollow aluminum profile member, lightweight structure can be achieved on the premise of effectively ensuring that an overall structure of the drone hangar 100 meets performance requirements of strength, stiffness, reliability, water resistance, dust resistance and the like under various operating conditions of the vehicle, thereby implementing lightweight design of the drone hangar 100.

According to some embodiments of this application, the housing 112 is a double-layer structural member with a hollow interior. That is, the housing 112 is a sandwich structural member composed of an inner plate and an outer plate. With such arrangement, heat from an external high-temperature environment can be effectively insulated to prevent heat outside the housing 112 from being conducted into the hangar compartment 13 and affecting normal operation of the components in the hangar compartment 13, so that the drone hangar 100 can better cope with complex external high-temperature environments, and applicability of the drone hangar 100 is improved.

Optionally, a mounting bracket (not shown in the figure) is disposed at the bottom of the housing 112. In this way, the entire drone hangar 100 can be mounted onto a vehicle roof through the mounting bracket by the housing 112.

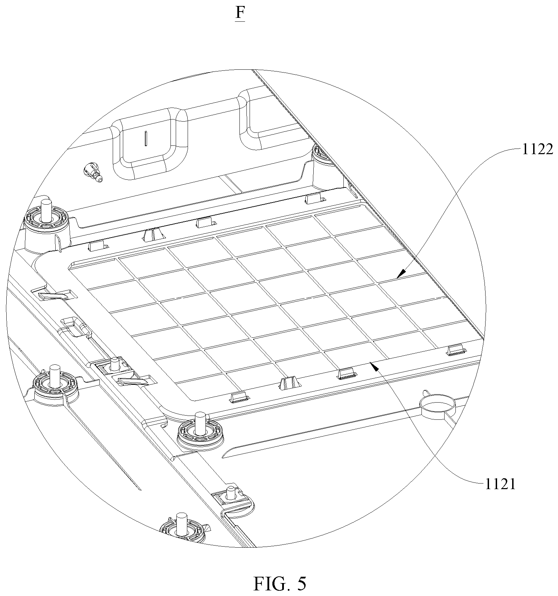

According to some embodiments of this application, in conjunction with FIG. 4 and FIG. 5, an air inlet 1121 is formed on one side of the housing 112 that is away from the opening 111, and a dust filter screen 1122 is disposed at the air inlet 1121. For example, in the examples shown in FIG. 4 and FIG. 5, an air inlet 1121 that extends through a bottom wall of the housing 112 is formed at the bottom of the housing 112, and a grid-shaped dust filter screen 1122 is disposed at the air inlet 1121. In this way, an interior of the hangar compartment 13 can exchange heat with an exterior of the housing 112 through the air inlet 1121 to prevent the components in the hangar compartment 13 from being damaged due to excessive temperature after long-time operation, thereby facilitating use of the components in the hangar compartment 13. In addition, when the temperature of the battery 203 is high in the charging process, a combined action of the heat exchange apparatus 1312 and the air inlet 1121 may implement air flow between the charging compartment 131 and the exterior of the housing 112 to effectively achieve heat dissipation in the hangar compartment 13, thereby effectively ensuring that the drone hangar 100 can satisfy favorable waterproof, dustproof and heat dissipation performance.

Optionally, with reference to FIG. 4, a sealing member 121 is disposed between the hangar door 12 and the opening 111. For example, in the example shown in FIG. 4, the hangar door 12 can slide rightward to open and close the opening 111. Sealing strips are arranged on a left side, a front side, and a rear side of the opening 111, respectively. The sealing strip can effectively fill a gap between the opening 111 and the hangar door 12, thereby improving sealing performance of the hangar compartment 13 as well as waterproof and dustproof performance of the hangar compartment 13.

According to some optional embodiments of this application, at least one of a camera (not shown in the figure), a lighting lamp (not shown in the figure), and an image transmission antenna (not shown in the figure) is disposed in the hangar compartment 13. With such arrangement, the camera in the hangar 1 can photograph takeoff and landing of the drone 200 and movement process of each mechanism in the hangar 1, and transmit data to a host computer in the vehicle in real time. The lighting lamp in the hangar 1 may assist the takeoff and landing of the drone 200 at night or when the ambient light intensity is low. The image transmission antenna can ensure that a photographed picture is transmitted to a host computer in the vehicle in real time when the drone 200 is used, so that the user can remotely control flight of the drone 200 by using a handle in the vehicle.

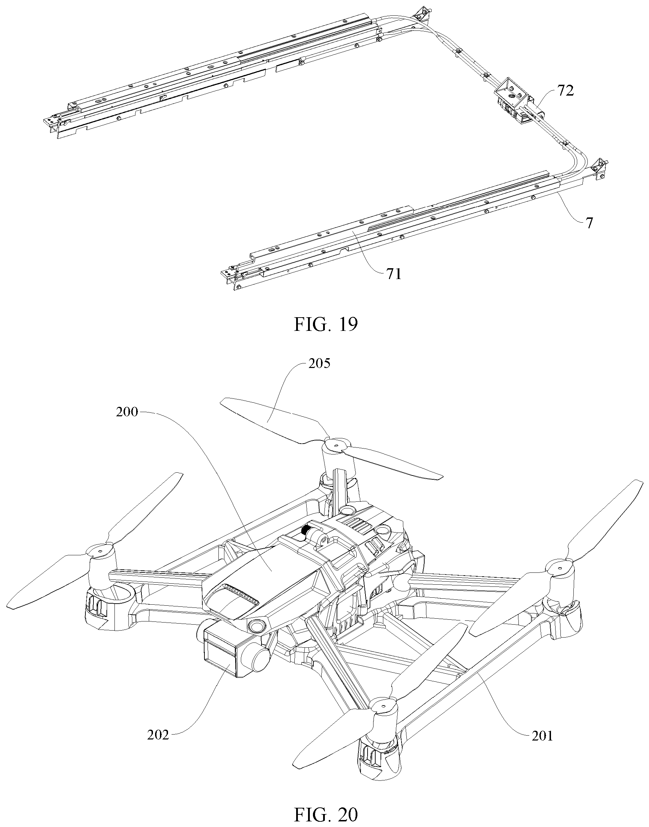

According to some embodiments of this application, with reference to FIG. 4, FIG. 6, and FIG. 19, an opening and closing mechanism 7 is disposed at the opening 111, and the opening and closing mechanism 7 is connected to the hangar door 12 to move the hangar door 12 along the length direction of the hangar 1 to open or close the opening 111. For example, in an example shown in FIG. 19, the opening and closing mechanism 7 is of a flexible shaft and cable type structure, and the motor 72 drives two flexible shaft cables to drive a hangar door guide rail 71 to reciprocate and linearly move to open and close the opening 111. To prevent the hangar door 12 from failing to open automatically due to a fact that the motor 72 is inoperable during maintenance or accidental power failure of the hangar 1, the opening and closing mechanism 7 is further provided with a manual opening structure (not shown). For example, a flexible cable is manually pulled to move the hangar door guide rail 71, thereby facilitating manual opening of the hangar door 12.

This application may implement one-button takeoff and landing of a vehicle-mounted drone 200. With reference to FIG. 4 and FIG. 6, a general process of takeoff and landing of the drone 200 of this application is as follows:

When the user sends a one-button takeoff instruction to the drone 200 through the host computer in the vehicle, each motion mechanism 5 in the hangar compartment 13 quickly completes position self-detection, and then the battery swapping mechanism 3 drives the clamping assembly 33 to move to a predetermined position of the charging compartment 131 through the movement of the second driving member 311. The clamping assembly 33 clamps and takes out a fully charged battery 203 by the clamping arms 331 at a front end, and the battery support member 332 at the bottom of the clamping assembly 33 extends to support the battery 203, thereby ensuring clamping stability of the battery 203. After the battery 203 is taken out from the charging compartment 131, the rotating assembly 32 rotates the clamping assembly 33 and the battery 203 by 90°, the battery 203 is adjusted from the front-rear direction to the left-right direction, and the battery 203 is moved to a tail of the drone 200 with the cooperation of the second driving member 311, so that the battery 203 is aligned with a battery mounting position on the drone 200. Afterwards, the second driving member 311 drives the battery 203 to be inserted from the tail of the drone 200, and the switch pressing member 333 on the clamping assembly 33 presses the switch button 204 on the fuselage of the drone 200 to complete a power on operation of the drone 200. Then, the hangar door 12 is opened to completely expose the motion mechanism 5, the landing platform 2, and the centering mechanism 6, and the second driving member 311, the rotating assembly 32, and the clamping assembly 33 are restored to initial positions thereof. After the hangar door 12 is fully opened, the landing platform 2 is lifted by the lifting assembly 52 to a highest position to be approximately flush with the opening 111, so that the drone 200 is completely exposed outside the hangar 1, and the impact of turbulence caused by propellers 205 when the drone 200 takes off can be effectively avoided. Subsequently, the centering mechanism 6 releases the drone 200, and the gimbal fixing mechanism 23 is linked with the second clamping rod 62 to release the protection of the camera gimbal 202. The user can control the drone 200 by using a remote-control handle to complete takeoff.

According to this application, the drone 200 can take off after completing automatic battery swapping, automatic charging, and returning for battery swapping due to low power. When the user sends a one-button return landing instruction to the drone 200 in the vehicle or the battery 203 of the drone 200 is in a low power state, the drone 200 returns to a position directly above the hangar 1 along a return path. In addition, the hangar door 12 is opened to fully expose the landing platform 2 and the centering mechanism 6. The lifting assembly 52 drives the landing platform 2 to lift to a highest position, and the centering mechanism 6 and the gimbal fixing mechanism 23 remain in an open state. After the drone 200 lands on the landing platform 2, the centering mechanism 6 quickly centers and clamps the drone 200, and the gimbal fixing mechanism 23 snaps onto the camera gimbal 202 of the drone 200. Then, the lifting assembly 52 drives the drone 200 and the landing platform 2 to lower to a lowest height, the hangar door 12 is closed simultaneously. After the hangar door 12 is completely closed, the second driving member 311 drives the clamping assembly 33 to quickly approach the tail of the drone 200, and the switch pressing member 333 on the clamping assembly 33 repeatedly presses the switch button 204 of the drone 200 to complete the power off operation of the drone 200. The battery 203 is pulled out from the tail of the drone 200 by the clamping arms 331, while the battery support member 332 at the bottom of the clamping assembly 33 extends to support the battery 203 to prevent the battery 203 from falling. Then, the second driving member 311 drives the clamping assembly 33 to move rightward, and the rotating assembly 32 transfers the battery 203 to a direction of the charging compartment 131, and feeds the battery 203 into the battery slot 1311 corresponding to the charging compartment 131. Afterwards, the clamping assembly 33 takes out a battery 203 from another battery slot 1311 in a same way, the new battery 203 can be inserted into the tail of the drone 200 through rotation of the rotating assembly 32 and movement of the clamping assembly 33. After completing the power on operation, the clamping assembly 33 returns to an initial position, thereby completing an automatic battery swapping function. The charging compartment 131 performs electric quantity detection and charging on the battery 203 of the drone 200 after the battery 203 is properly seated, thereby achieving an automatic charging function. Then, the hangar door 12 is opened, after the drone 200 is lifted by the lifting assembly 52, the landing platform 2 and the centering mechanism 6 to the highest position, the first clamping rods 61 and the second clamping rods 62 of the centering mechanism 6 release the drone 200, allowing the drone 200 to take off again.

A vehicle 1000 according to an embodiment of a second aspect of this application includes the drone hangar 100 according to the foregoing embodiment of the first aspect of this application, as shown in FIG. 27.

According to the vehicle 1000 provided by this embodiment of this application, the drone hangar 100 provided by this application may support a linked control with an in-vehicle infotainment. For example, a user may control takeoff and landing of a drone 200 by one button in the vehicle with simple operation, and an application scenario of the drone 200 (such as, over-the-horizon route planning, in-vehicle mobile aerial photography, road condition detection, parking assistance, advanced autonomous driving, search and rescue, patrol inspection, and mapping) is increased, use functions of the vehicle 1 are enriched, and service performance of the vehicle 1000 is improved.

Other configurations and operations for the drone hangar 100 and the vehicle 1000 according to embodiments of this application are known to those of ordinary skill in the art, and thus will not be described in detail herein.

In description of this application, it will be understood that an orientation or a position relationship indicated by the term "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial", "radial", "circumferential", or the like is an orientation or a position relationship shown in the accompanying drawings, and is merely intended to facilitate description and simplify description of this application, but is not intended to indicate or imply that a specified apparatus or element needs to have a specific orientation, be constructed in a specific orientation, and operate in a specific orientation. Therefore, such terms cannot be construed as a limitation on this application.

In description of this specification, reference term such as "one embodiment", "some embodiments", "schematic embodiment", "example", "specific example", or "some examples" means that a specific feature, structure, material, or characteristic described with reference to the embodiment or example is included in at least one embodiment or example of this application. In this specification, schematic expressions of the terms do not necessarily refer to a same embodiment or example.

Although the embodiments of this application have been shown and described, those of ordinary skill in the art may appreciate that various changes, modifications, substitutions, and variations may be made to these embodiments without departing from the principle and spirit of this application. The scope of this application is defined by the claims and their equivalents.

## Claims

1. A drone hangar (100), comprising:
a hangar (1), having a hangar body (11) and a hangar door (12), an opening (111) being formed on the hangar body (11), the hangar door (12) being movably disposed on the hangar body (11) to open and close the opening (111), and a hangar compartment (13) being jointly defined by the hangar body (11) and the hangar door (12);
a landing platform (2); and
a battery swapping mechanism (3), the landing platform (2) and the battery swapping mechanism (3) being disposed side by side in the hangar compartment (13), the landing platform (2) being opposite to the opening (111), and the battery swapping mechanism (3) being staggered from the opening (111).

2. The drone hangar (100) according to claim 1, wherein the opening (111) is formed at the top of the hangar body (11), and the landing platform (2) is capable of moving up and down relative to the hangar (1).

3. The drone hangar (100) according to claim 1 or 2, further comprising:
a motion mechanism (5), the motion mechanism (5) being disposed in the hangar compartment (13), and the motion mechanism (5) being configured to cooperate with the landing platform (2) to drive the landing platform (2) to move close to or away from the opening (111).

4. The drone hangar (100) according to claim 3, wherein the motion mechanism (5) comprises:
a motion mechanism body (51), the motion mechanism body (51) being disposed in the hangar compartment (13); and
a plurality of lifting assemblies (52), the plurality of lifting assemblies (52) being disposed on the motion mechanism body (51), the plurality of lifting assemblies (52) being spaced apart along a circumferential direction of the motion mechanism body (51), the landing platform (2) being separately connected to the plurality of lifting assemblies (52), and the plurality of lifting assemblies (52) being configured to drive the landing platform (2) to move close to or away from the opening (111).

5. The drone hangar (100) according to claim 4, further comprising an electrical system (4), the electrical system (4) being communicatively connected to the battery swapping mechanism (3) and the landing platform (2) separately, a plurality of fitting members (21) being disposed on the landing platform (2), and the plurality of fitting members (21) being spaced apart along a circumferential direction of the landing platform (2); and each of the lifting assemblies (52) comprising:
a screw rod (521), the screw rod (521) being connected to the motion mechanism body (51), the screw rod (521) extending along an axial direction of the opening (111), and the fitting member (21) being in threaded engagement with the screw rod (521); and
a first driving member (522), the first driving member (522) being connected to the screw rod (521), and the electrical system (4) being communicatively connected to the first driving member (522).

6. The drone hangar (100) according to any one of claims 1 to 5, further comprising:
a centering mechanism (6), the centering mechanism (6) being disposed on the landing platform (2), and the centering mechanism (6) being movable relative to the landing platform (2) to move toward or away from a center of the landing platform (2).

7. The drone hangar (100) according to claim 6, wherein the centering mechanism (6) comprises:
two first clamping rods (61), the first clamping rods (61) extending along a length direction of the hangar (1), the two first clamping rods (61) being spaced apart along a width direction of the hangar (1), and the two first clamping rods (61) being capable of moving close to or away from each other along the width direction of the hangar (1); and
two second clamping rods (62), the two second clamping rods (62) extending along the width direction of the hangar (1), the two second clamping rods (62) being spaced apart along the length direction of the hangar (1), and the two second clamping rods (62) being capable of moving close to or away from each other along the length direction of the hangar (1).

8. The drone hangar (100) according to claim 7, wherein a first opening (22) is formed on the landing platform (2), and a gimbal fixing mechanism (23) is disposed on one side of the landing platform (2) that is away from the opening (111), the gimbal fixing mechanism (23) is opposite to the first opening (22), and when the centering mechanism (6) moves toward the center of the landing platform (2), a part of the gimbal fixing mechanism (23) passes through the first opening (22).

9. The drone hangar (100) according to claim 8, wherein an opening and closing member (221) is disposed at the first opening (22), the opening and closing member (221) is connected to one of the two second clamping rods (62), the second clamping rod (62) is configured to drive the opening and closing member (221) to move along the length direction of the hangar (1) to open or close the first opening (22), when the centering mechanism (6) moves toward the center of the landing platform (2), the opening and closing member (221) opens the first opening (22), and when the centering mechanism (6) moves away from the center of the landing platform (2), the opening and closing member (221) closes the first opening (22).

10. The drone hangar (100) according to any one of claims 1 to 9, wherein a charging compartment (131) is disposed in the hangar compartment (13); and the battery swapping mechanism (3) comprises:
a battery swapping mechanism body (31), the battery swapping mechanism body (31) being disposed in the hangar compartment (13), and a second driving member (311) being disposed on the battery swapping mechanism body (31);
a rotating assembly (32), the rotating assembly (32) being connected to the battery swapping mechanism body (31), the rotating assembly (32) being adjacent to the charging compartment (131), the rotating assembly (32) being connected to the second driving member (311), and when the second driving member (311) operates, the second driving member (311) driving the rotating assembly (32) to move between the charging compartment (131) and the landing platform (2); and
a clamping assembly (33), one end of the clamping assembly (33) being rotatably connected to the rotating assembly (32), and the other end of the clamping assembly (33) being provided with a clamping arm (331).

11. The drone hangar (100) according to claim 10, wherein the other end of the clamping assembly (33) is provided with a battery support member (332) that is telescopic relative to the clamping assembly (33), and the battery support member (332) is located below the clamping arm (331).

12. The drone hangar (100) according to claim 10 or 11, wherein the other end of the clamping assembly (33) is provided with a switch pressing member (333).

13. The drone hangar (100) according to any one of claims 10 to 12, further comprising an electrical system (4), wherein the electrical system (4) is communicatively connected to the battery swapping mechanism (3) and the landing platform (2) separately; and
the charging compartment (131) comprises a plurality of battery slots (1311) and a charging controller (1313), the charging controller (1313) is communicatively connected to the electrical system (4) and the plurality of battery slots (1311) separately; and/or, a battery temperature sensor (1314) is disposed on the charging compartment (131).

14. The drone hangar (100) according to any one of claims 10 to 13, wherein a heat exchange apparatus (1312) is disposed on one side of the charging compartment (131) that is away from the hangar door (12).

15. The drone hangar (100) according to any one of claims 1 to 14, wherein the hangar body (11) comprises:
a housing (112), the opening (111) being formed on the housing (112), and the hangar compartment (13) being jointly defined by the housing (112) and the hangar door (12); and
a hangar frame (113), the hangar frame (113) being disposed in the housing (112), and both the landing platform (2) and the battery swapping mechanism (3) being disposed on the hangar frame (113).

16. The drone hangar (100) according to claim 15, wherein the housing (112) is a nylon member; and/or, the hangar frame (113) is a hollow aluminum profile member.

17. The drone hangar (100) according to claim 15 or 16, wherein the housing (112) is a double-layer structural member with a hollow interior.

18. The drone hangar (100) according to any one of claims 15 to 17, wherein an air inlet (1121) is formed on one side of the housing (112) that is away from the opening (111), and a dust filter screen (1122) is disposed at the air inlet (1121).

19. The drone hangar (100) according to any one of claims 1 to 18, wherein a sealing member (121) is disposed between the hangar door (12) and the opening (111).

20. A vehicle (1000), comprising the drone hangar (100) according to any one of claims 1 to 19.
